# EUROPEAN PATENT APPLICATION

(11) **EP 1 041 120 A2**
(43) Date of publication of application: **04.10.2000**
(21) Application number: 00105882.5
(22) Date of filing: 20.03.2000
(51) Int. Cl.: C09B 47/06

(54) **Method for producing copper phthalocyanine pigment**

(30) Priority: 23.03.1999 JP 7707799; 29.03.1999 JP 8508099; 25.10.1999 JP 30197499; 25.10.1999 JP 30197599
(71) Applicant: TOYO INK MANUFACTURING CO., LTD., Tokyo (JP)
(72) Inventor: Endo, Atsushi,c/o Toyo Ink Manufacturing Co., Ltd, Chuoko, Tokyo (JP)
(74) Representative: Koepe, Gerd L., Dipl.-Chem.

(57) **Abstract**

There is disclosed a method for producing copper phthalocyanine, which comprises running a reaction for synthesizing copper phthalocyanine by using a compound represented by the formula (1), phthalic acid or derivative thereof excluding the compound represented by the formula (1), copper or a copper compound and urea to obtain a reaction product: 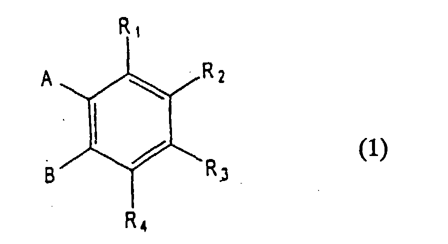 wherein R₁ to R₄ respectively represent a hydrogen atom or a substituent represented by the formula (2) wherein at least one of R₁ to R₄ is a substituent represented by the formula (2) and A and B respectively represent a carboxyl group, an alkoxycarbonyl group, a carbamoyl group, a carboxylate group or a nitryl group wherein the A and B may be further cyclized with each other to form an imide or an acid anhydride: 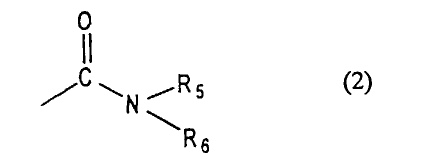 wherein R₅ and R₆ respectively represent a hydrogen atom, a substituted or non-substituted alkyl group, a substituted or non-substituted alkenyl group or a substituted or non-substituted cyclic group wherein R₅ and R₆ are not a hydrogen atom simultaneously and may form a five- or six-membered ring which may have a nitrogen atom.

## Description

### BACKGROUND OF THE INVENTION

### 1. Field of the Invention

The present disclosure is related to the disclosures provided in the following Japanese patent applications filed prior to the filing of the present application: "A Method for Producing Copper Phthalocyanine", filed as Japanese patent applications No. 11-77077 and No. 11-301974; and "A Method for Producing Copper Phthalocyanine Pigment", filed as Japanese patent applications No. 11-85080 and No. 11-301975; and the disclosures of the aforementioned applications are hereby expressly incorporated by reference herein in their entireties.

The present invention relates to a method for producing a copper phthalocyanine pigment, the method enabling a copper phthalocyanine pigment to be produced in a step of synthesizing copper phthalocyanine either directly or through a pigmentation step requiring extremely small energy and short process time.

### 2. Description of the Prior Art

A process for producing a copper phthalocyanine pigment generally involves a step of synthesizing crude copper phthalocyanine and a pigmentation step of micronizing the crude copper phthalocyanine. In the synthesis step, copper phthalocyanine can be obtained by heating raw materials in a high-boiling point solvent. In the synthesis step, however, the growth of crystals of phthalocyanine molecules is made at the same time in the solvent. The resulting copper phthalocyanine, therefore, has coarse particles typically and hence exhibits unclear color tone and low tinting strength as a pigment, showing that it does not possess such an ability as to be put to practical use. It is therefore necessary to provide a pigmentation step to impart pigmentary properties such as a color tone and tinting strength to the crude copper phthalocyanine prepared in the synthesis step.

As methods usable in this pigmentation step, an acid swelling method in which sulfuric acid and copper phthalocyanine are used to form a salt, which is then poured into a large amount of water to precipitate fine copper phthalocyanine pigments, an acid-pasting method in which copper phthalocyanine is dissolved in a large quantity of sulfuric acid and thereafter pigments are precipitated, a dry milling method in which coarse crude copper phthalocyanine is dry-milled using an apparatus such as a ball mill and a solvent salt milling method in which crude copper phthalocyanine is kneaded in the presence of a solvent and a milling agent, e.g., a salt, by using a kneader. In these chemical methods using sulfuric acid, however, a great quantity of sulfuric acid waste is produced, requiring much laborious work to treat the sulfuric acid waste. In mechanically milling methods such as a dry milling method and solvent salt milling method, long process time and a lot of mechanical energy are required and hence these methods are extremely unprofitable.

U.S. Patent No. 2,556,727 discloses a method which is used in a step of the pigmentation of phthalocyanine and which is superior in productivity and profitability from an industrial point of view. In this method, synthesized crude phthalocyanine is wet-milled in a volatile organic solvent by using fine grinding media to obtain a phthalocyanine pigment. Japanese Patent Application Published No. 3-74706 discloses a method in which a milling step, namely, a pigmentation step for crude phthalocyanine is carried out in the presence of an organic solvent containing a binder resin by using fine grinding media to perform the pigmentation and the production of ink at the same time thereby manufacturing ink directly from crude phthalocyanine. In these methods, the wet milling is performed to deal with the synthesized phthalocyanine compound which is once separated, washed and dried. To produce a phthalocyanine pigment with reduced works between synthesizing and pigmentation steps, a method in which a slurry obtained in a step of synthesizing phthalocyanine is wet-milled while it includes the organic solvent used in the synthesis without being removed is disclosed in Japanese Patent Application Laid-Open No. 8-302229.

However, in all of these methods, it is necessary to mill crude copper phthalocyanine having a particle diameter of 10 µ m or more until its particle diameter is reduced to 0.1 µ m. Therefore, these methods still require considerable time and large energy and are hence unprofitable. If the wet-milling would be performed using economically practical and small energy, pigment particle could be micronized insufficiently, leaving coarse particles present. When such an insufficiently micronized pigment is used to produce ink, many problems concerning the qualities, e.g., clearness and fluidity, required for ink will arise.

Japanese Patent Application Laid-Open No. 61-195166 discloses the use of specific crystal growth inhibitors such as trimellitic acid anhydride, pyromellitic acid anhydride or their derivatives, e.g., carboxylic ester or amide thereof as specified therein in synthesizing copper phthalocyanine to reduce the burden of a wet-milling step subsequently to be conducted. Japanese Patent Application Laid-Open No. 61-203175 further discloses the use of a diamine having two primary amino groups in addition to such an inhibiting agent. When such a compound as trimellitic acid anhydride, pyromellitic acid anhydride, or their derivatives as specified is used in the synthesis of copper phthalocyanine, however, the product firmly adheres to a reactor on account of strong coagulation during the synthesis. This not only makes it difficult to continue stirring but also brings about strong aggregation of the final pigment, giving rise to the problem of inferior dispersibility.

In order to overcome the above problems, a method is proposed in which trimellitic acid anhydride or pyromellitic acid anhydride is added only in a small amount to run a reaction for synthesizing copper phthalocyanine and the resulting organic solvent slurry of copper phthalocyanine is wet-milled using fine grinding media, followed by removing the organic solvent to prepare a pigment. However, because the amount of trimellitic acid anhydride or pyromellitic acid anhydride to be used is limited to avoid the adhesion to the reactor in synthesizing copper phthalocyanine, only insufficiently fined copper phthalocyanine is obtained on the contrary. Therefore, even in this method, considerable time and energy are still required in the subsequent wet milling step using fine grinding media.

### SUMMARY OF THE INVENTION

It is a real surprise that the inventors of the present invention have succeeded in producing copper phthalocyanine which stands comparison with conventional copper phthalocyanine pigments in the ability as a pigment in a single step by adding a specific material, namely, a material represented by the formula (1) to run a reaction for synthesizing copper phthalocyanine according to a so-called phthalic acid method.

The present invention provides a method for producing copper phthalocyanine, which comprises running a reaction for synthesizing copper phthalocyanine by using a compound represented by the formula (1), phthalic acid or derivative thereof excluding the compound represented by the formula (1), copper or a copper compound and urea to obtain a reaction product: 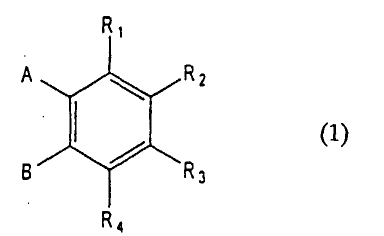 wherein R₁ to R₄ respectively represent a hydrogen atom or a substituent represented by the formula (2) shown below wherein at least one of R₁ to R₄ is a substituent represented by the formula (2) and A and B respectively represent a carboxyl group, an alkoxycarbonyl group, a carbamoyl group, a carboxylate group or a nitryl group wherein the A and B may be further cyclized with each other to form an imide or an acid anhydride: 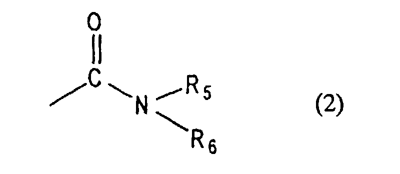 wherein R₅ and R₆ respectively represent a hydrogen atom, a substituted or non-substituted alkyl group, a substituted or non-substituted alkenyl group or a substituted or non-substituted cyclic group wherein R₅ and R₆ are not a hydrogen atom simultaneously and may form a five- or six-membered ring which may have a nitrogen atom.

Preferably the compound represented by the formula (1) is used in an amount of 0.5 to 15% by weight based on the amount of the phthalic acid or derivative thereof.

For obtaining copper phthalocyanine pigment of further micronized particle size, the method may further comprise wet-milling the reaction product in the presence of grinding media. In this case, running the synthesis reaction may be performed in the presence of an organic solvent, and the wet-milling step may be performed without removing the organic solvent present in the reaction product. It is further possible that the method further comprises adding an organic solvent to the reaction product prior to the wet-milling step, the wet-milling step is then performed to deal with the reaction product including the organic solvent added.

For further better quality of the copper phthalocyanine pigment obtained, the step of running the synthesis reaction mentioned at the beginning of this summary section may be performed in the presence of an organic solvent, and the production method may further comprise the steps of removing the organic solvent from the reaction product to prepare an intermediate product, reslurrying the intermediate product in water to prepare a slurry product, and wet-milling the slurry product.

When wet-milling is performed, the grinding media may be in globular form, and preferably have particle diameters of 0.1 to 1.0 mm.

From an industrial point of view, it is preferable that A and B are both carboxyl groups in the general formula (1), which may be further dehydration-condensed to form a carboxylic anhydride. Examples of the compound of the formula (1) are N-phenyl trimellitic acid monocarboxamide, N-benzyl trimellitic acid monocarboxamide, N-cyclohexyl trimellitic acid monocarboxamide, N-ethylhexyl trimellitic acid monocarboxamide, and anhydrides thereof. Specifically, N-phenyl trimellitic acid monocarboxamide and anhydride thereof are important examples.

According to the present invention, the synthesized copper phthalocyanine can be used directly as a pigment without being further processed in a pigmentation step. Also, the present invention ensures that a copper phthalocyanine pigment which stands comparison in ability with conventional products can be produced in a shorter time by smaller energy compared with the current methods comprising steps of the synthesis and pigmentation of copper phthalocyanine.

### DETAILED DESCRIPTION OF THE INVENTION

Examples of the compound represented by the formula (1) may include the following a to g.
a. Phthalic acid derivatives represented by the formula (3) 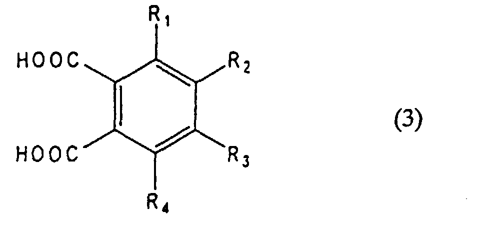 wherein R₁ to R₄ respectively represent the same meanings as above described.
b. Cyanobenzoic acid derivatives represented by the formula (4) 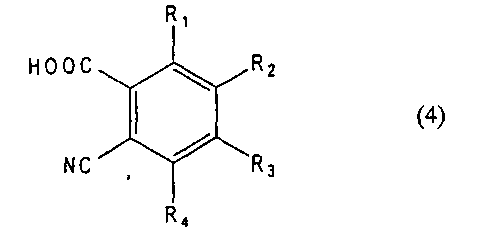 wherein R₁ to R₄ respectively represent the same meanings as above described.
c. Phthalonitrile derivatives represented by the formula (5) 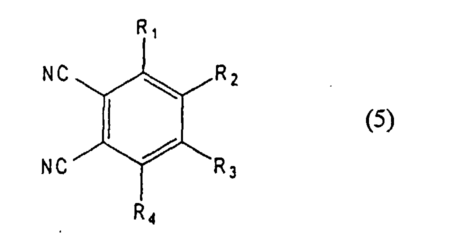 wherein R₁ to R₄ respectively represent the same meanings as above described.
d. Compounds produced by making a part or all of carboxyl groups contained in each of the derivatives represented by the formulae (3) or (4) combine with an alkaline metal, alkaline earth metal, copper, ammonia, amine or the like to form a salt.
e. Acid anhydrides produced by dehydration-condensing carboxyl groups of the derivatives represented by the formula (3).
f. Compounds produced by esterifying a part or all of carboxyl groups contained in the derivatives of the formula (1) or (3) by a reaction between the carboxyl groups and alcohols.
g. Compounds produced by substituting carbamoyl groups or imide groups for a part or all of carboxyl groups contained in the derivatives of the formula (3) or (4) or acid anhydrides of the above (e) by a reaction between the carboxyl groups or the acid anhydrides and ammonia or amines.

In the present invention, R₅ and R₆ in the formula (2) respectively represent a hydrogen atom, an alkyl group which may have a substituent, an alkenyl group which may have a substituent or a cyclic group which may have a substituent.

The alkyl group and the alkenyl group are linear or branched wherein R₅ and R₆ may be combined to form a five- or a six-membered ring which may include a nitrogen atom. Preferably, the number of carbons contained in each of the alkyl group and the alkenyl group is 1 to 18. Examples of the substituent include halogen such as fluorine, chlorine and bromine, hydroxyl group, alkoxyl group, mercapto group, and alkylthio group.

The cyclic group which may have a substituent includes an aryl group, heterocyclic group and cycloalkyl group. Examples of aryl groups include a phenyl group, naphthyl group, anthryl group, phenanthryl group, benzyl group, phenethyl group, diphenylmethyl group, triphenylmethyl group, styryl group, cyanamyl group and biphenyryl group. Examples of heterocyclic groups include a furyl group, furfuryl group, thienyl group, pyrrolyl group, pyridyl group, piperidyl group, morpholinyl group and quinoyl group. Examples of cycloalkyl groups include a cyclopropyl group, cyclopentyl group and cyclohexyl group. Examples of the substituent include an alkyl group, alkoxyl group, halogen such as fluorine, chlorine and bromine, hydroxyl, mercapto group, alkylthio group and cyano group.

To produce the compound of the formula (1), there is, for instance, a method in which a compound, e.g., trimellitic acid chloride anhydride, from the derivatives of the formula (3), (4) or (5) in which R₁ to R₄ in the formula (3), (4) or (5) are respectively a hydrogen atom or a carbonyl halide group and at least one of R₁ to R₄ is a carbonyl halide group, is reacted with a desired amine compound.

Phthalic acid or phthalic acid derivatives are widely known as the compound forming a copper phthalocyanine ring. Examples of phthalic acid derivatives may include salts of phthalic acid, phthalic acid anhydride, phthalimides, phthalamide acid and its salts or esters, esters of phthalic acid and phthalonitrile, wherein each benzene nucleus of these compounds may have a halogen atom such as chlorine or bromine, alkyl group such as a methyl, ethyl or propyl group, alkoxy group such as a methoxy or ethoxy group, aryl group which may have a substituent, carboxyl group, sulfone group or nitro group. Phthalic acid anhydride and their derivatives with a benzene nucleus having a halogen atom are most advantageous from an industrial point of view since these compounds are inexpensive, copper phthalocyanine is obtained in high yield and copper phthalocyanine to be obtained has high purity and an excellent color tone. Phthalonitrile is expensive and highly toxic although it enables copper phthalocyanine to be produced in high yield and gives high purity and color tone to the resulting copper phthalocyanine. Therefore, it requires special facilities and is hence undesirable.

As the copper compound in the present invention, all of copper compounds usually used in the synthesis of copper phthalocyanine may be used. Examples of the copper compound include copper halides, copper oxide, copper phosphate, copper nitrate, copper hydroxide, copper acetate and copper sulfate. Copper (I) chloride is most preferable.

In the present invention, any catalyst usually used to synthesize copper phthalocyanine may be used. Examples of the catalyst include molybdenum compounds such as ammonium molybdate, molybdic acid, ammonium phosphorus molybdate and molybdenum oxide, tungsten compounds such as ammonium tungstate and ammonium phosphorus tungstate, vanadium arsenate, boric acid, halides or oxyhalides of titanium, tin or antimony. Among these compounds, ammonium molybdate is most superior and hence desirable. It is desirable that each of these catalysts be usually used in an amount of 0.1 to 2 % by weight based on the amount of copper or a copper compound.

In the present invention, copper phthalocyanine may be produced in the same reactor and reaction procedures as in the case of the usual production of copper phthalocyanine. An organic solvent may be used in the reaction. Though it is possible to run the reaction without using an organic solvent, the color tone of the resulting copper phthalocyanine is more clear in the case of using an organic solvent and it is therefore preferable to use an organic solvent. As the organic solvent, all of organic solvents which are usually used in a reaction for the production of copper phthalocyanine may be used. Examples of the organic solvent include alkylbenzene, nitrobenzene, alkylnaphthalene, chloronaphthalene, naphthalene, paraffin, naphthene, kerosene, trichlorobenzene and sulfolane.

Preferably, the reaction for synthesizing copper phthalocyanine is run at 160 to 200°C, namely at the same temperature used conventionally in the methods for synthesizing copper phthalocyanine.

In the present invention, the compound represented by the formula (1) is used in an amount of preferably 0.5 to 15% by weight, more preferably 0.5 to 10% by weight and most preferably 2 to 5% by weight based on the amount of the phthalic acid or phthalic acid derivative. An amount less than 0.5% by weight is excessively small and makes it difficult to obtain the effect of the present invention. If the amount exceeds 15% by weight, the resulting copper phthalocyanine is easily coagulated, which adversely affects the qualities of a pigment depending upon the application of copper phthalocyanine as a pigment and such an amount is therefore undesirable.

The amount of each reactant other than the compound represented by the formula (1) is not different from that used in a conventional method for the synthesis of copper phthalocyanine. Preferably, the ratio by mol of urea to phthalic acid or a phthalic acid derivative is 2 to 4 and the ratio by mol of copper chloride to phthalic acid or a phthalic acid derivative is 0.2 to 0.3.

Examples of an apparatus used to carry out wet-milling in the present invention include a vibration mill, attritor, horizontal sand mill, vertical sand mill, agitator mill, ball mill and purl mill. An organic solvent may be used in the wet-milling. The exemplified solvents as usable in the reaction step may also be used in the wet-milling step.

The grinding media used in the present invention include metal beads, glass beads and ceramic beads. It is preferable to use steel beads in consideration of profitability and removability of the grinding media when they are intermingled in the final pigment slurry. It is also preferable to use zirconia beads in consideration of the wear resistance and crash resistance. It is desired to select proper grinding media by taking the application of the final pigment into consideration. The grinding medium has a globular form, rod-like form or the like. Among these forms, a globular form is most preferable. Preferably the grinding media has a maximum particle diameter of 0.2 to 1.0 mm. When the maximum particle diameter is less than 0.2 mm, it becomes hard to separate a pigment slurry from the grinding media. When the maximum particle diameter exceeds 1.0 mm, only an insufficient micronization effect is obtained.

In the wet-milling step of the present invention, the concentration of the pigment is preferably 1 to 50% by weight and more preferably 10 to 40% by weight. When the concentration of the pigment is less than 1% by weight, the productivity is remarkably impaired. When the concentration of the pigment is above 50% by weight, this brings about high viscosity and reduces the milling effect.

In the wet-milling step of the present invention, a pigment-dispersion agent, such as resins, e.g., an alkyd resin, polyester resin or acrylic resin and surfactants, which are used in usual ink or paints may be used. In the case of reslurrying copper phthalocyanine, obtained in a synthesis reaction, in water, an water-soluble organic solvent such as glycols, glycol ethers or alcohols may be further mixed in the slurry mixture.

### EXAMPLES

The present invention will be hereinafter explained in detail by way of examples in which all designations of parts and % indicate pans by weight and percent by weight (wt.%), respectively, unless otherwise noted.

### Example 1

A reactor equipped with an air cooling tube was charged with 200 parts of t-pentylbenzene, 18.6 parts of aniline and 42.0 parts of trimellitic acid chloride anhydride. The mixture was reacted at 150°C for 2 hours. Then the reaction product was filtered, washed with hexane and dried to obtain 52.2 parts of N-phenyl trimellitic acid anhydride monocarboxamide.

12.0 parts of N-phenyl trimellitic acid anhydride monocarboxamide, 126.5 parts of phthalic acid anhydride, 162 parts of urea, 22.3 parts of copper (I) chloride and 0.3 parts of ammonium molybdate were reacted in 290 parts of t-pentylbenzene at 180°C under a pressure of 2.5 kg/cm² for 4 hours. Thereafter, the solvent was distilled under reduced pressure. The residue was heated with stirring in 2% sulfuric acid at 90°C for one hour, filtered, washed with hot water and dried to obtain 122 parts of a blue product.

The specific surface area of the resulting product which was measured according to BET method was 52 m²/g.

### Example 2

The same reaction and after-treatment as in Example 1 were carried out, except that 12.6 parts of N-benzyl trimellitic acid anhydride monocarboxamide was used in place of 12.0 parts of N-phenyl trimellitic acid anhydride monocarboxamide, to obtain 123 parts of a blue product.

The specific surface area of the resulting product which was measured according to BET method was 44 m²/g.

### Example 3

The same reaction and after-treatment as in Example 1 were carried out, except that 12.3 parts of N-cyclohexyl trimellitic acid anhydride monocarboxamide was used in place of 12.0 parts of N-phenyl trimellitic acid anhydride monocarboxamide, to obtain 125 parts of a blue product.

The specific surface area of the resulting product which was measured according to BET method was 35 m²/g.

### Example 4

The same reaction and after-treatment as in Example 1 were carried out, except that 13.6 parts of N-2-ethylhexyl trimellitic acid anhydride monocarboxamide was used in place of 12.0 parts of N-phenyl trimellitic acid anhydride monocarboxamide, to obtain 123 parts of a blue product.

The specific surface area of the resulting product which was measured according to BET method was 28 m²/g.

### Comparative Example 1

The same reaction and after-treatment as in Example 1 were carried out, except that N-phenyl trimellitic acid anhydride monocarboxamide was not used but phthalic acid anhydride was used instead in an amount of not 126.5 parts but 133.2 parts, to obtain 116 parts of a blue product.

The specific surface area of the resulting product which was measured according to BET method was 6 m²/g.

### Comparative Example 2

The same reaction as in Example 1 was carried out, except that 8.6 parts of trimellitic acid anhydride was used in place of 12.0 parts of N-phenyl trimellitic acid anhydride monocarboxamide.

As a consequence, the product adhered to the reactor during reaction and the stirring of the product was eventually made impossible.

### Comparative Example 3

The same reaction and after-treatment as in Example 1 were carried out, except that 13.7 parts of 2-ethylhexyl trimellitate anhydride was used in place of 12.0 parts of N-phenyl trimellitic acid anhydride monocarboxamide, to obtain 126 parts of a blue product.

The specific surface area of the resulting product which was measured according to BET method was 8 m²/g.

### Comparative Example 4

The same reaction as in Example 1 was carried out, except that 8.6 parts of trimellitic acid anhydride monocarboxamide was used in place of 12.0 parts of N-phenyl trimellitic acid anhydride monocarboxamide. As a consequence, the reaction product adhered to the reactor and the stirring blade and the stirring was eventually made difficult. The reaction product was taken out and subjected to the same after-treatment as in Example 1, to obtain 101 parts of a blue product.

The specific surface area of the resulting product which was measured according to BET method was 11 m²/g.

### Example 5

12.0 parts of N-phenyl trimellitic acid anhydride monocarboxamide, 126.5 parts of phthalic acid anhydride, 162 parts of urea, 22.3 parts of copper (I) chloride and 0.3 parts of ammonium molybdate were reacted in 290 parts of t-pentylbenzene at 180°C under a pressure of 2.5 kg/cm² for 4 hours.

The resulting slurry of copper phthalocyanine was cooled to 80°C, placed in a vertical sand mill filled with 400 parts of zirconia beads with a diameter of 0.3 mm and milled at 80°C for 2 hours. A product obtained by distilling the solvent from the milled product was heated with stirring in 2 liters of 2% sulfuric acid at 90°C for one hour, filtered, washed with hot water and dried to obtain 121 parts of a blue powder.

The specific surface area of the resulting product which was measured according to BET method was 68 m²/g.

### Example 6

The same synthesis reaction as in Example 5 was run and the reaction product from which the solvent was distilled under reduced pressure was reslurried in 100 parts of water.

20 parts of diethylene glycol, 50 parts of tetramethyldecynediol (a surfactant of acetylene alcohol type) and 3 parts of lauryldimethylbetaine (an amphoteric surfactant) were added to the resulting water slurry of copper phthalocyanine. The mixture was placed in a vertical sand mill filled with 400 parts of zirconia beads with a diameter of 0.3 mm and milled at 80°C for 2 hours. To the milled product was added 2 liters of 2% sulfuric acid. The resulting mixture was heated with stirring at 90°C for one hour, filtered, washed with hot water and dried to obtain 120 parts of a blue powder.

The specific surface area of the resulting product which was measured according to BET method was 71 m²/g.

### Comparative Example 5

The same reaction, micronization using a sand mill and after-treatment as in Example 5 were carried out, except that N-phenyl trimellitic acid anhydride monocarboxamide was not used but phthalic acid anhydride was used instead in an amount of not 126.5 parts but 133.3 parts, to obtain 117 parts of a blue powder.

The specific surface area of the resulting product which was measured according to BET method was 31 m²/g.

### Comparative Example 6

The same reaction and after-treatment as in Example 5 were carried out, except that 1.7 parts of trimellitic acid anhydride and 132 parts of phthalic acid anhydride were used in place of 12.0 parts of N-phenyl trimellitic acid anhydride monocarboxamide and 126.5 parts of phthalic acid anhydride respectively, to obtain 116 parts of a blue powder.

The specific surface area of the resulting product which was measured according to BET method was 39 m²/g.

### Comparative Example 7

The same reaction and after-treatment as in Example 5 were carried out, except that 8.6 parts of trimellitic acid anhydride monocarboxamide was used in place of 12.0 parts of N-phenyl trimellitic acid anhydride monocarboxamide, to obtain 116 parts of a blue powder.

The specific surface area of the resulting product which was measured according to BET method was 41 m²/g.

Each powder obtained in Examples 5 and 6 and Comparative Examples 5, 6 and 7 was made into ink by using a Hoover automatic muller, and the resulting ink was kneaded with commercially available white ink. The relative tinting strength and clearness by visual observation when the resulting kneaded product was color-developed are shown in Table 1 together with the specific surface area of the pigment.

**TABLE 1**

| | Specific surface area (m²/g) | Tinting strength (%) | Clearness |
|---|---|---|---|
| Example 5 | 68 | 100 | clear |
| Example 6 | 71 | 102 | clear |
| Comparative Example 5 | 31 | 66 | unclear |
| Comparative Example 6 | 39 | 73 | unclear |
| Comparative Example 7 | 41 | 75 | unclear |

It should be noted that specific surface area of copper phthalocyanine typically obtained in the conventional synthesis process, namely phthalic anhydride process, has been 5-10 m²/g, only quite coarse particles have thus been obtained in the conventional synthesis process. In the Comparative Examples 2, 3, and 4 in which trimellitic acid anhydride or derivatives thereof having no substituent represented by the formula (2) was utilized in place of the compound represented by the formula (1), strong coagulation occurred and the specific surface area was still so small, therefore the product was still quite unsatisfactory for the practical use of copper phthalocyanine pigment.

## Claims

1. A method for producing copper phthalocyanine, said method comprising running a reaction for synthesizing copper phthalocyanine by using a compound represented by the formula (1) as shown below, phthalic acid or derivative thereof excluding the compound represented by the formula (1), copper or a copper compound and urea to obtain a reaction product: 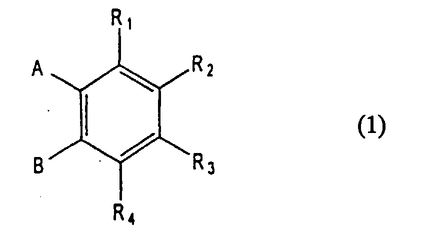 wherein R₁ to R₄ respectively represent a hydrogen atom or a substituent represented by the formula (2) shown below wherein at least one of R₁ to R₄ is a substituent represented by the formula (2) and A and B respectively represent a carboxyl group, an alkoxycarbonyl group, a carbamoyl group, a carboxylate group or a nitryl group wherein the A and B may be further cyclized with each other to form an imide or an acid anhydride: 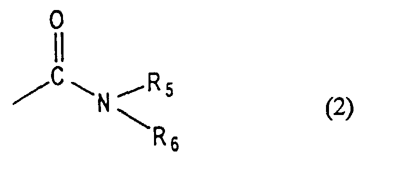 wherein R₅ and R₆ respectively represent a hydrogen atom, a substituted or non-substituted alkyl group, a substituted or non-substituted alkenyl group or a substituted or non-substituted cyclic group wherein R₅ and R₆ are not a hydrogen atom simultaneously and may form a five- or six-membered ring which may have a nitrogen atom.

2. The method according to Claim 1, wherein the compound represented by the formula (1) is used in an amount of 0.5 to 15% by weight based on the amount of the phthalic acid or derivative thereof.

3. The method according to Claim 1, further comprising the step of wet-milling the reaction product in the presence of grinding media.

4. The method according to Claim 3, wherein said step of running the synthesis reaction is performed in the presence of an organic solvent and said wet-milling step is performed without removing the organic solvent present in the reaction product.

5. The method according to Claim 4, further comprising the step of adding an organic solvent to the reaction product prior to said wet-milling step, wherein said wet-milling step is performed to deal with the reaction product including said organic solvent added.

6. The method according to Claim 1, wherein said step of running the synthesis reaction is performed in the presence of an organic solvent, and said method further comprising the steps of:
removing said organic solvent from the reaction product to prepare an intermediate product;
reslurrying the intermediate product in water to prepare a slurry product; and,
wet-milling the slurry product.

7. The method according to Claim 3, wherein the grinding media are in globular form with particle diameters of 0.1 to 1.0 mm.

8. The method according to Claim 1, wherein said A and B are both carboxyl groups, which may be dehydration-condensed to form a carboxylic anhydride.

9. The method according to Claim 8, wherein said compound represented by the formula (1) is selected from the group consisting of N-phenyl trimellitic acid monocarboxamide, N-benzyl trimellitic acid monocarboxamide, N-cyclohexyl trimellitic acid monocarboxamide, N-ethylhexyl trimellitic acid monocarboxamide, and anhydrides thereof.

10. The method according to Claim 9, wherein said compound represented by the formula (1) is N-phenyl trimellitic acid monocarboxamide or anhydride thereof.
